# EUROPEAN PATENT APPLICATION

(11) **EP 2 393 060 A1**
(43) Date of publication of application: **07.12.2011**
(21) Application number: 10305579.4
(22) Date of filing: 02.06.2010
(51) Int. Cl.: G06T 1/00, G10L 19/00, H04L 9/18

(54) **Providing a watermarked decoded audio or video signal derived from a watermarked audio or video signal that was low bit rate encoded and decoded**

(71) Applicant: Thomson Licensing, 92130 Issy-les-Moulineaux (FR)
(72) Inventor: Gries, Ulrich, 30419 Hannover (DE); Baum, Peter Georg, 30539 Hannover (DE); Arnold, Michael, 30916 Isernhagen (DE); Voessing, Walter, 30455 Hannover (DE)
(74) Representative: Hartnack, Wolfgang

(57) **Abstract**

Various audio signal watermarking systems are known, which are also applied to digitally encoded audio signals. However, in current audio signal watermarking systems the watermark signal and its watermark payload do not survive very low bit rate audio coding, in particular parametric coding. According to the invention, a watermarked uncompressed audio signal bitstream is low-bit rate compressed, but the watermarking is removed and the watermark's payload only is transmitted together with the compressed audio signal bitstream. At decoder side, the received audio signal bitstream is de-compressed and watermarked again using the transmitted watermark payload. Advantageously, it does not matter that the compressed bitstream is not watermarked because the compressed bitstream can be encrypted prior to transmission.

## Description

The invention relates to a method and to a system for providing a watermarked decoded audio or video signal derived from a watermarked audio or video signal that was low bit rate encoded and decoded.

### Background

Various audio signal watermarking (WM) systems are known, which are also applied to digitally encoded audio signals.

### Invention

However, in current audio signal watermarking systems the watermark signal and its watermark payload often do not survive very low bit rate audio coding, in particular parametric encoding. This means that, following compression of a watermarked audio signal by such a coder, the watermark payload cannot be retrieved any more at receiver or decoder side.

This causes a problem because parametric audio coding (like AAC+, mp3PRO, unified speech and audio coder) is going to be used more and more in the future.

In one usage scenario, a dedicated company performs post production and authoring of pre-release DVDs for a studio. The studio requires that the content is watermarked, so that a leak can be tracked if content is leaked to the internet. Specific-language subtitles for the movie are to be generated by a subcontractor in a country where that specific language is spoken. Therefore the original-language audio content is sent to that subcontractor. Since using high bandwidth is expensive, the audio signal is compressed strongly by a codec using parametric coding. As a consequence, the watermark can no more be retrieved from the content the subcontractor has received. The dedicated company can comply with its contract with the studio only by sending high-quality or nearly high-quality (i.e. weak compression) audio content to the subcontractor, which is more expensive and takes more time.

A problem to be solved by the invention is to provide watermarked and low bit rate encoded audio signals from which the watermark signal and the watermark payload can be detected at decoder side. This problem is solved by the methods disclosed in claims 1 to 3. A corresponding system is disclosed in claim 4.

According to the invention, a watermarked uncompressed audio signal bitstream is low-bit rate compressed, but the watermarking is removed and the watermark's payload only is transmitted or transferred together with the compressed audio signal bitstream, because the bit rate is so low that the watermark signal itself can not be transmitted. At decoder side, the received audio signal bitstream is decompressed and watermarked again using the transmitted watermark payload.

The invention combines the advantages of parametric or other low bit rate encoding like small audio signal file size with the advantages of watermarking like traceability of content.

In principle, the inventive method is suited for providing a watermarked decoded audio or video signal derived from a watermarked audio or video signal that was low bit rate encoded and decoded, said method including the steps:
- low bit rate encoding said watermarked audio or video signal, thereby removing and retrieving the watermark signal so as to provide an encoded audio or video signal without watermarking;
- decoding said watermark signal so as to provide the included watermark payload data;
- encoding said watermark payload data so as to provide a related watermark signal;
- low bit rate decoding said encoded audio or video signal, thereby embedding said watermark signal, so as to provide a decoded watermarked audio or video signal.

In principle the inventive system is suited for providing a watermarked decoded audio or video signal derived from a watermarked audio or video signal that was low bit rate encoded and decoded, said system including:
- means being adapted for low bit rate encoding said watermarked audio or video signal, thereby removing and retrieving the watermark signal so as to provide an encoded audio or video signal without watermarking;
- means being adapted for decoding said watermark signal so as to provide the included watermark payload data;
- means being adapted for encoding said watermark payload data so as to provide a related watermark signal;
- means being adapted for low bit rate decoding said encoded audio or video signal, thereby embedding said watermark signal, so as to provide a decoded watermarked audio or video signal.

Advantageous additional embodiments of the invention are disclosed in the respective dependent claims.

### Drawing

Exemplary embodiments of the invention are described with reference to:

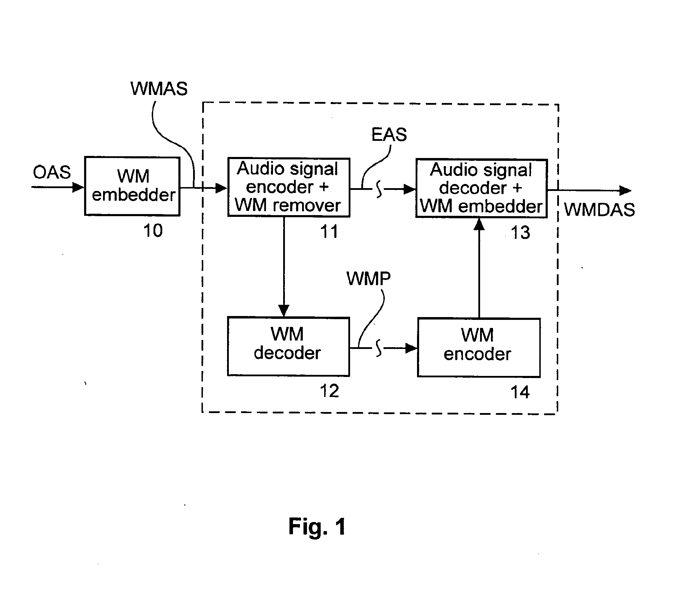

- Fig. 1: block diagram of a system according to the invention.

### Exemplary embodiments

In Fig. 1, an original audio signal OAS is watermarked in a known watermarking embedder stage or step 10 and enters a system 1 according to the invention. The watermarked audio signal WMAS is encoded in an audio signal encoder and watermarking detector and remover stage or step 11, wherein the watermarking is detected and removed. The watermarking signal is fed to a watermark decoder stage or step 12. The encoded audio signal EAS is transferred or transmitted to a corresponding audio signal decoder and watermark embedder stage or step 13, which decodes to uncompressed audio and at the same time watermarks with the watermarking signal, and which outputs the decoded and watermarked audio signal WMDAS. The WM payload data WMP decoded in watermark decoder stage/step 12 are transferred or transmitted (e.g. embedded in the EAS bitstream) to a corresponding watermark encoder stage or step 14 which supplies step/stage 13 with the watermarking signal to be embedded.

The term "low bit rate" means a bit rate which is so low that an additional watermark embedded in the code for the encoded audio or video signal, following decoding of the audio or video signal, can no more be detected or evaluated usefully, i.e. an encoded audio signal data rate below a range of e.g. 24kBit/s to 6kBit/s.

Advantageously, the data rate of the encoded audio signal will not increase significantly from the embedding of the WM payload data because the data rate of the WM payload data WMP is much smaller than the data rate of the audio coding parameters representing the encoded audio signal EAS.

The inventive processing is independent from the specific parametric encoder/decoder used because it is carried out in the uncompressed domain.

The uncompressed audio signal is always watermarked. Since it is to be decompressed before it becomes useful (e.g. for listening to it), there is kind of protection in the non-watermarked compressed domain.

The inventive processing operates well under the condition that the communication chain audio encoder/WM detector 11, transmission channel and audio decoder/WM embedder 13 can be controlled completely. In case the transmission channel or line cannot be controlled and a standard audio codec is used, an adversary could read the bitstream and use a standard audio decoder without WM embedder to create a non-watermarked version of the audio signal. Therefore the audio encoder/WM detector can also include a known encryption module, so that the bitstream EAS and possibly the watermark payload WMP is encrypted. The audio decoder/WM embedder 13 includes a corresponding decryption module, so that the encrypted bit stream is decrypted, decoded and watermarked. The watermark is embedded jointly with the deciphering and decompression, such that the watermark embedding during the decoding is rendered mandatory because it is linked to the deciphering. This represents a conversion from parametric data (parametric compressed data, watermark) to an integrated multimedia signal (watermarked decoded audio) in a secure way.

The audio encoding/decoding is e.g. an AAC+, Unified Speech and Audio coder, CELP, MPEG4 Parametric Audio, SBR Parametric Stereo (PS), or mp3PRO encoding/decoding.

Instead of an audio signal, the invention can relate to a video signal, wherein the low bit rate audio encoding/decoding is replaced by a low bit rate video encoding/decoding.

The audio or video signal can be encoded/decoded frame-wise, wherein the watermark signal sections are assigned to these frames.

## Claims

1. Method for providing a watermarked decoded audio or video signal (WMDAS) derived from a watermarked audio or video signal (WMAS) that was low bit rate encoded (11) and decoded (13), said method including the steps:
- low bit rate encoding (11) said watermarked audio or video signal (WMAS), thereby removing and retrieving the watermark signal so as to provide an encoded audio or video signal (EAS) without watermarking;
- decoding (12) said watermark signal so as to provide the included watermark payload data (WMP);
- encoding (14) said watermark payload data (WMP) so as to provide a related watermark signal;
- low bit rate decoding (13) said encoded audio or video signal (EAS), thereby embedding said watermark signal, so as to provide a decoded watermarked audio or video signal (WMDAS).

2. Method for providing a non-watermarked encoded audio or video signal (EAS) derived from a watermarked audio or video signal (WMAS) that was low bit rate encoded (11), said method including the steps:
- low bit rate encoding (11) said watermarked audio or video signal (WMAS), thereby removing and retrieving the watermark signal so as to provide an encoded audio or video signal (EAS) without watermarking;
- decoding (12) said watermark signal so as to provide the included watermark payload data (WMP).

3. Method for providing a watermarked decoded audio or video signal (WMDAS) derived from a watermarked audio or video signal (WMAS) that was low bit rate encoded (11), whereby the watermarking was removed and the corresponding watermark payload data were provided, said method including the steps:
- encoding (14) said watermark payload data (WMP) so as to provide a related watermark signal;
- low bit rate decoding (13) said encoded audio or video signal (EAS), thereby embedding said watermark signal, so as to provide a decoded watermarked audio or video signal (WMDAS).

4. System for providing a watermarked decoded audio or video signal (WMDAS) derived from a watermarked audio or video signal (WMAS) that was low bit rate encoded (11) and decoded (13), said system including:
- means (11) being adapted for low bit rate encoding said watermarked audio or video signal (WMAS), thereby removing and retrieving the watermark signal so as to provide an encoded audio or video signal (EAS) without watermarking;
- means (12) being adapted for decoding said watermark signal so as to provide the included watermark payload data (WMP);
- means (14) being adapted for encoding said watermark payload data (WMP) so as to provide a related watermark signal;
- means (13) being adapted for low bit rate decoding said encoded audio or video signal (EAS), thereby embedding said watermark signal, so as to provide a decoded watermarked audio or video signal (WMDAS).

5. Method according to claim 1, or apparatus according to claim 4, wherein, together with said low bit rate encoding and said watermark removal (11), said audio or video signal is encrypted so as to provide an encoded encrypted audio or video signal (EAS) without watermarking,
and wherein, together with said low bit rate decoding (13) of said encoded encrypted audio or video signal, said audio or video signal is correspondingly decrypted so as to provide said decoded watermarked audio or video signal (WMDAS).

6. Method according to claim 2 wherein, together with said low bit rate encoding and said watermark removal (11), said audio or video signal is encrypted so as to provide an encoded encrypted audio or video signal (EAS) without watermarking.

7. Method according to claim 3 wherein, together with said low bit rate decoding (13) of said encoded encrypted audio or video signal, said audio or video signal is correspondingly decrypted so as to provide said decoded watermarked audio or video signal (WMDAS).

8. Method according to one of claims 1 to 3 and 5 to 7, or apparatus according to one of claims 4 or 5, wherein said audio encoding/decoding is a parametric encoding/decoding.

9. Method according to one of claims 1 to 3 and 5 to 8, or apparatus according to one of claims 4, 5 and 8, wherein said audio encoding/decoding is an AAC+, Unified Speech and Audio coder, CELP, MPEG4 Parametric Audio, SBR Parametric Stereo [PS] or mp3PRO encoding/decoding.
